(19) **Europäisches Patentamt**

**European Patent Office**

**Office européen des brevets**

(11) Publication number: **0 029 698**
**B1**

(12) **EUROPEAN PATENT SPECIFICATION**

(45) Date of publication of patent specification: **03.10.84**

(21) Application number: **80304129.2**

(22) Date of filing: **18.11.80**

(51) Int. Cl.³: **B 01 F 3/08,** F 23 K 5/00,
F 02 M 37/00

(54) **Liquid fuel processing apparatus.**

(30) Priority: **20.11.79 US 96012**

(43) Date of publication of application:
**03.06.81 Bulletin 81/22**

(45) Publication of the grant of the patent:
**03.10.84 Bulletin 84/40**

(84) Designated Contracting States:
**AT BE CH DE FR GB IT LI NL SE**

(56) References cited:
**FR-A- 384 668**
**FR-A-1 177 722**
**FR-A-2 389 776**
**GB-A- 841 261**
**US-A-1 701 164 .**
**US-A-4 117 550**

(73) Proprietor: **ALTERNATE LIQUID FUELS
CORPORATION**
**1308 - 67th Street**
**Oakland California 94608 (US)**

(72) Inventor: **Curtis, William S.**
**26706 Underwood Street**
**Hayward California 94544 (US)**

(74) Representative: **Ashmead, Richard John et al
KILBURN & STRODE 30 John Street
London, WC1N 2DD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Description

The present invention relates to apparatus for use in conjunction with a mixing tank to process various combustible fuel components to form a new homogenous, stable "alternate" liquid fuel mixture with little or no tendency to stratify or separate. More particularly, the invention relates to the combination of a series of components to permit re-circulation and processing and by mechanical means to yield the new homogenous "alternate" liquid fuel mixture.

According to the present invention apparatus for use in connection with a fuel storage tank for processing high volatility combustible fuels and fuel oils contained in said tank to develop a homogenous and stable alternate liquid fuel mixture is characterised by the combination in sequence for fluid transmission between an outlet port of the said tank and an inlet port of the said tank of (i) a fuel filter (14), (ii) a fuel heater (20) comprising a heat exchanger to which heat is provided by the exhaust of an internal combustion engine (30), (iii) a pump (38) driven by the said internal combustion engine, and (iv) a static mixer. The apparatus can thus provide for recirculation, mixing and mechanical lock bonding of the various components.

The present invention also provides a method of developing a homogenous and stable alternate liquid fuel mixture from high volatility combustible fuels and fuel oils characterised by transmitting the fuel components from a fuel storage tank through a fuel filter, then through a fuel heater comprising a heat exchange to which heat is provided by the exhaust of an internal combustion engine, then through a pump driven by the internal combustion engine and then through a static mixer, and then returning said fuel mixture to the said tank.

The liquid fuel mixtures herein produced and discussed, referred to as "alternate", which can be used as a substitute for fuel oil in large commercial and industrial boilers or as fuel for internal combustion engines, can be mixed from petroleum products previously thought to be unusable.

The filter used in the present invention for removal of undesirable particles from the liquid fuels may be a basket strainer. It may also be a dual or duplex strainer which is capable of being cleaned without interrupting the flow of fuel through the apparatus. When a strainer or filter is filled with unwanted residuum it is simply removed, cleaned and replaced. If a single basket strainer is used the flow of fuel through the apparatus must be interrupted but if the filter is, for example, a twin basket strainer the fuel strainer may be removed, cleaned and replaced without interruption of the flow of fuel through the apparatus.

A magnetic insert element may also be provided in the apparatus, for example in the suction line leading to the pump, to remove metal particles small enough to pass through the filter.

The pump may be a positive displacement pump driven for example by variable speed internal combustion engine. The pump and the engine capacity and speed should be such that an effective predetermined fluid velocity and pressure can be maintained in the apparatus. The engine may have a load control such as a torque limiter arranged between it and the pump. Gear reduction may also be employed.

The apparatus may be provided with a controllable bypass means by which the fuel flow can be made to bypass the heater.

The liquid fuel from the storage tank, in the form of its components as yet unmixed, partially mixed or completely mixed dependent on the extent of recirculation which has taken place, is advanced through the series connected elements of the apparatus, in sequence, between the two ports of the storage tank in order to effect the mixture desired for combustion.

Thus it will be seen that it is an object of the present invention to provide a method and apparatus which is capable of efficiently and economically producing the "alternate" liquid fuel mixture.

It is a further object of the present invention to provide an apparatus including a means for heating the alternate liquid fuel components by using waste heat generated by the engine which powers the apparatus.

Heating the alternate liquid fuel components facilitates their transmission through the apparatus by reducing their viscosity. This increases the efficiency of the apparatus without the addition of an energy-consuming preheating device.

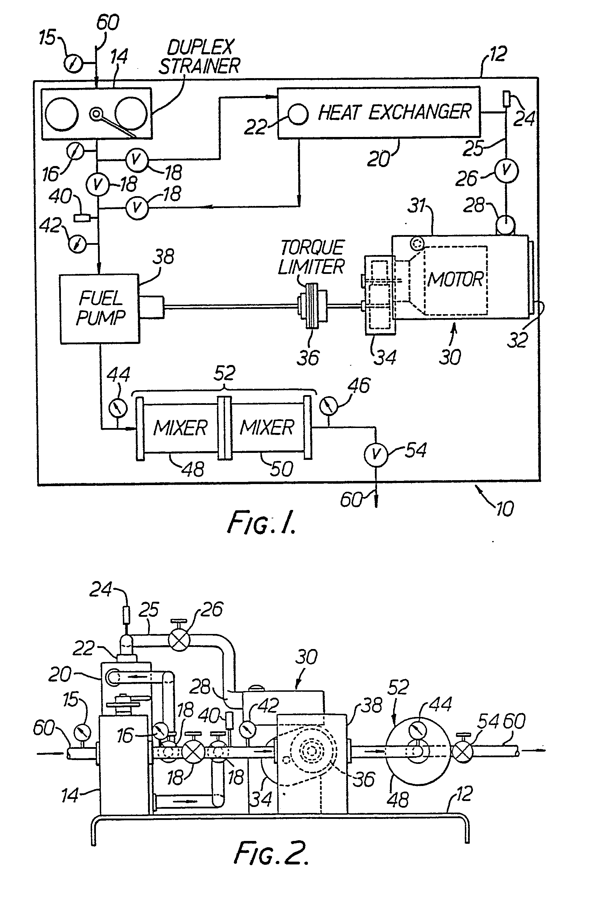

The invention may be embodied in various ways. A specific embodiment will now be described, by way of example, with reference to the accompanying drawings in which Figure 1 is a schematic representation of the apparatus in accordance with the present invention as it may be used in connection with an alternate liquid fuel storage tank,

Figure 2 is a front view of the apparatus in the same configuration as shown in Figure 1.

Referring to Figure 1 and Figure 2, the pertinent elements of the apparatus 10 are schematically shown supported on a base 12. The liquid fuel components or mixture are transmitted in the direction of the arrows in Figure 1 along a fuel line 60 from a fuel storage tank (not shown) to a filter or strainer 14, which is a duplex twin basket metal strainer through which the components flow thereby removing unwanted particles from the fuel. After the basket strainer is filled with unwanted residuum it is simply removed, cleaned and replaced. The pressure drop across the strainer is measured via gauges 15 and 16 to assist in determining whether the strainer 14 needs cleaning.

After passing through strainer 14, the fuel is routed through a heat exchanger 20 by using control valves 18. An operator can compare the pressure and temperature as indicated on pressure gauges 16, 42 and 44 and temperature gauge 40 with predetermined optimum mixing parameters which depend on the fuel components being mixed.

The fuel is transmitted through the entire apparatus by means of a positive displacement liquid pump 38 which has a power source 30, which is an internal combustion engine. The power source 30 has a control panel 32 and transmits power to the fuel pump 30 by means of clutch and reduction gear assembly 34 and a torque limiter 36. The torque limiter 36 protects the power source from overload by slipping when the torque demand exceeds a preset value as a result of shock loads, overloads, etc.

Due to the varied consistencies and unrefined quantity of many of the "alternate" liquid fuel components, such changing load conditions which require some type of protective device may be encountered.

The final stage of the apparatus is the synthesising stage 52 comprised of two static mixers 48 and 50. These are articles which are well known and have a series of baffles and orifices through which the fluid to be mixed is pumped. The fluid is mixed by the sheer force and turbulence developed by passage of the fluid through the static mixer. Pressure gauges 44 and 46 are provided for the operator to maintain vigilance over a constant flow of the components through the mixing stage 52. Check valve 54 is provided to prevent back flow of the mixed liquid fuel as it is fed back into the storage tank.

The internal combustion engine which comprises the power source 30 may have an optional weather closure and fuel tank 31. There is also provided a means 25 for piping the hot exhaust gases from the internal combustion engine exhaust 28 to the heat exchanger 20. The exhaust gases are then ultimately released to the atmosphere through heat exchanger exhaust outlet 22. The means for piping the hot exhaust gases to the heat exchanger is equipped with a temperature gauge 24 by which the operator may monitor the exhaust temperature. Exhaust gases can also be directed into the atmosphere by means of a bypass control 26.

The arrow before the strainer 14 represents the introduction of the liquid fuel or its components into the apparatus of the invention from an outlet port preferably arranged near the bottom of a storage tank. The continuation of the transmission line 60 after the check valve 54 is where the processed liquid fuel leaves the apparatus and enters the storage tank preferably near the top of the tank. The arrangement of the elements of the invention in the figure is an example of how the invention may be used in connection with the storage tank which contains the "alternate" liquid fuel.

The apparatus of the invention is operated after the fuel components are placed in a storage tank. The apparatus circulates, filters, heats and mixes fuel components until a homogenous mixture is achieved. The necessary time will vary according to the compatibility of the fuel components and the capacity of the pump and the volume of fuel components. Mixture is terminated when uniform fuel samples are obtained from the top and bottom of the storage tank.

## Claims

1. Apparatus for use in connection with a fuel storage tank for processing high volatility combustible fuels and fuel oils contained in said tank to develop a homogenous and stable alternate liquid fuel mixture characterised by the combination in sequence for fluid transmission between an outlet port of the said tank and an inlet port of the said tank of (i) a fuel filter (14), (ii) a fuel heater (20) comprising a heat exchanger to which heat is provided by the exhaust of an internal combustion engine (30), (iii) a pump (38) driven by the said internal combustion engine and (iv) a static mixer (52).

2. Apparatus as claimed in Claim 1 wherein the fuel filter (14) is capable of being cleaned without interruption of the flow of fuel through the apparatus.

3. Apparatus as claimed in Claim 1 or Claim 2 wherein the engine (30) has a load control.

4. Apparatus as claimed in Claim 3 wherein said load control comprises a torque limiter arranged between the pump (38) and the engine (30).

5. A method of developing a homogenous and stable alternate liquid fuel mixture from high volatility combustible fuels and fuel oils characterised by transmitting the fuel components from a fuel storage tank through a fuel filter, then through a fuel heater comprising a heat exchange to which heat is provided by the exhaust of an internal combustion engine, then through a pump driven by the internal combustion engine and then through a static mixer, and then returning said fuel mixture to the said tank.

## Revendications

1. Appareil à utiliser avec un réservoir de stockage de combustible pour traiter des huiles combustibles très volatiles et des huiles lourdes contenues dans le réservoir en vue de produire un autre mélange combustible liquide homogène et stable, caractérisé par la combinaison, dans l'ordre, pour le transfert de fluide entre une lumière de sortie du réservoir et une lumière d'entrée de ce réservoir (i), d'un filtre à combustible (14), (ii) d'un réchauffeur de combustible (20) comprenant un échangeur de chaleur auquel de la chaleur est fournie par l'échappement d'un moteur à combustion interne (30), (iii) d'une pompe (38) entraînée par le moteur à combustion interne et (iv) d'un mélangeur statique (52).

2. Appareil suivant la revendication 1, dans lequel le filtre à combustible (14) peut être nettoyé sans interrompre la circulation du combustible à travers l'appareil.

3. Appareil suivant la revendication 1 ou 2, dans lequel le moteur (30) comporte un régulateur de charge.

4. Appareil suivant la revendication 3, dans lequel le régulateur de charge comprend un limiteur de couple disposé entre la pompe (38) et le moteur (30).

5. Procédé de formation d'un autre mélange combustible liquide homogène et stable à partir d'huiles combustibles très volatiles et d'huiles lourdes, caractérisé en ce qu'on fait passer les fractions de combustible d'un réservoir de stockage de combustible à travers un filtre à combustible, puis à travers un réchauffeur de combustible comprenant un échangeur de chaleur auquel de la chaleur est fournie par l'échappement d'un moteur à combustion interne, ensuite à travers une pompe entraînée par le moteur à combustion interne et à travers un mélangeur statique, puis on renvoie la mélange combustible dans le réservoir.

**Patentansprüche**

1. Apparat für die Verwendung in Verbindung mit einem Brennstoffvorratstank zum Aufbereiten hochflüchtiger brennbarer Brennstoffe und Brennöle, die im Tank enthalten sind, um eine homogene und stabile alternative flüssige Brennstoffmischung zu erzeugen, dadurch gekennzeichnet, daß zur Fluidübertragung zwischen einer Auslaßöffnung des Tanks und einer Einlaßöffnung des Tanks in Kombination nacheinander, (i) ein Brennstoff-Filter (14), (ii) ein Brennstoff-Heizer (20), der einen Wärmeaustauscher enthält, dem Wärme vom Auspuff einer Innenbrennkraftmaschine (30) zugeführt ist, (iii) eine durch die Innenbrennkraftmaschine angetriebene Pumpe (38) und (iv) ein statischer Mischer (52) vorgesehen sind.

2. Apparat nach Anspruch 1, dadurch gekennzeichnet, daß das Brennstoff-Filter (14) ohne Unterbrechung der Strömung des Brennstoffs durch den Apparat reinigbar ist.

3. Apparat nach Anspruch 1 oder 2, dadurch gekennzeichnet, daß die Maschine (30) eine Laststeuerung aufweist.

4. Apparat nach Anspruch 3, dadurch gekennzeichnet, daß die Lastseuerung einen zwischen der Pumpe (38) und der Maschine (30) angeordneten Drehmomentbegrenzer enthält.

5. Verfahren zum Erzeugen einer homogenen und stabilen alternativen flüssigen Brennstoffmischung aus hochflüchtigen brennbaren Brennstoffen und Brennölen dadurch gekennzeichnet, daß die Brennstoffbestandteile von einem Brennstoffvorratstank durch ein Brennstoff-Filter, dann durch einen Brennstoffheizer, der einen Wärmetausch umfaßt, welchem Wärme durch den Auspuff einer Innenbrennkraftmaschine zugeführt wird, dann durch eine Pumpe, die durch Innenbrennkraftmaschine angetrieben wird, und dann durch einen statischen Mischer gefördert werden und die Brennstoffmischung dann in den Tank zurückgeführt wird.

0 029 698

*Fig. 1.*

*Fig. 2.*